# EUROPEAN PATENT APPLICATION

(11) **EP 3 062 486 A1**
(43) Date of publication of application: **31.08.2016**
(21) Application number: 16156226.9
(22) Date of filing: 18.02.2016
(51) Int. Cl.: H04L 29/08, G06F 17/30

(54) **METHODS, APPARATUSES AND COMPUTER PROGRAM PRODUCTS FOR ENABLING INTELLIGENT MERGING OF MODIFIED DATA**

(30) Priority: 25.02.2015 US 201514630786
(71) Applicant: Nokia Technologies Oy, 02610 Espoo (FI)
(72) Inventor: WIKMAN, Johan, 00200 Helsinki (FI); KOSKIMIES, Oskari, 00950 Helsinki (FI); MIKOLA, Timo Tapani, 33240 Tampere (FI)
(74) Representative: Nokia Corporation

(57) **Abstract**

An apparatus for intelligently merging conflicting data includes a processor and memory storing executable computer code causing the apparatus to at least perform operations including detecting a change(s) to a property of an item of data. The computer program code may further cause the apparatus to determine a version of the item of data and a version of the property or versions of unchanged properties responsive to detecting the property changed. The computer program code may further cause the apparatus to update the item of data to indicate the version of the item of data, the version of the changed property and versions of unchanged properties. The computer program code may further cause the apparatus to store updated item of data without storing prior versions of the data. The updated item of data is utilized in resolving conflicts with other data. Corresponding methods and computer program products are also provided.

## Description

### TECHNOLOGICAL FIELD

An example embodiment of the invention relates generally to wireless communication technology and more particularly, relates to a method, apparatus, and computer program product for performing intelligent merging of modified data, without having to preserve the entire actual historical data.

### BACKGROUND

The modem communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. Due to the now ubiquitous nature of electronic communication devices, people of all ages and education levels are utilizing electronic devices to communicate with other individuals or contacts, receive services and/or share information, media and other content. One area in which there is a demand to increase ease of information transfer relates to synchronization of data on communication devices.

Currently, many devices are oftentimes not integrated in any suitable manner. Instead, data on one device may be local to that particular communication device and if the user on a specific device needs data that is located on another device, the user typically has to laboriously copy the data over to the specific device. In an instance in which the data is editable, a data management problem may be created at the same time.

One solution to this problem is that the data resides, not on any particular device, but instead in the cloud where each device may access the data. By placing the data in the cloud, this makes all data available to all devices and the aforementioned data management problem may also be solved. A problem or drawback with this approach is that unless there is continuous uninterrupted connectivity by the devices, which in practice is difficult to achieve, particularly in the mobile device context, there may be moments when the devices are rendered unusable.

Another solution is to store all data on all devices and keep the communication devices in synchronization using replication. For instance, in single master replication, there is a single node with which all other nodes replicate. However, single master replication suffers from the same weakness as the cloud based solution. For example, if the master node is inaccessible, each device becomes isolated. However, since most data is available on each device, they may still be used. In multi-master replication, any node may replicate with any other node, which is more resilient to reduced connectivity issues.

To the consumer, the best situation is likely to be one where it appears as if all devices of the consumer contain all the consumer's data, all the time. This illusion may be created and maintained by keeping all data on all devices and regularly synching the devices with each other.

A problem with multi-master replication is that since the data not only resides but may also be modified in multiple places, there may occasionally be conflicts since the data may be modified in two places at the same time. When data is replicated, the conflict should be detected and dealt with in a suitable manner.

One approach to this problem may be to use some mechanism that allows detection of conflicts, and once the conflicts are detected, to deterministically determine a "winner" among conflicting documents, for example, and to select the winner document and delete the loser document. In this regard, for example, if two different devices encounter exactly the same conflicting documents, they both will deterministically choose the same winner. The benefit of this approach is that it is simple and also minimizes the storage needs.

However, a problem with this approach is that, instead of simply picking the winner, if it is desired to combine data from the two conflicting documents, it is typically difficult to do so, since in the general case it is unknown what exact properties of each document version has changed. For instance, consider the following example document.

```
             var contact = {
                firstName: "Joh",
                lastName: "Do"
              };
```

Consider further that this document is on one device and is changed into the following document.

```
             var contact = {
                firstName: "John",
                lastName: "Do"
              };
```

Additionally, consider that on another device the document is changed into the following document.

```
             var contact = {
                firstName: "Joh",
                lastName: "Doe"
              };
```

In this regard, there may be a conflict at replication time. As such, in an instance in which the conflict should be resolved, it is typically unknown what properties were changed where and hence a device may be unable, for example, to automatically select "John" from one document as the firstName and "Doe" from the other document as lastName, which undoubtedly may reflect the wishes of the user.

At present, in order to be able to merge the documents in an intelligent way, preservation of the history up until the most recent common ancestor is typically needed. In this manner, it may be possible to figure out what has changed where and to automatically merge documents. Consider again the example above. If there is access to the original document, it may be deduced that firstName was changed on one device and lastName on another and therefore merge them in a meaningful way and end up with the following.

```
             var contact = {
                firstName: "John",
                lastName: "Doe"
              };
```

However, there are a number problems related to the preservation of the history (e.g., the entire history). For instance, retaining the history is quite expensive in terms of storage, since the preservation of the most common ancestor of all device pairs participating in the replication network is typically needed.

Additionally, at present, it is typically non-trivial to decide when the history or some part of it may be deleted. The permanent disappearance of one replication node means, unless explicit measures are taken, that the history may never be deleted.

In view of the foregoing drawbacks, it may be beneficial to provide an efficient and reliable mechanism of merging modified data, without having to preserve all corresponding historical data.

### BRIEF SUMMARY

A method, apparatus and computer program product are therefore provided for enabling performance of intelligent merging of modified/conflicting data, without having to preserve the entire actual historical data. In this regard, an example embodiment may provide a framework that enables automatic merging of an item(s) of data (e.g., documents) that have been modified concurrently on different communication devices, in a manner that preserves the most recent changes from both versions of the item(s) of data.

As a prerequisite, items of data (e.g., documents) may be versioned in a manner that allows detection of conflicts in the data. In an instance in which a property of an item(s) of data (e.g., a document) is changed, an example embodiment may store in the item(s) of data (e.g., a document) itself information indicating the version of the item(s) of data in an instance in which the particular property was modified. Indicating the version of the item(s) of data in an instance in which a particular property was modified enables performance of intelligent merging of conflicting information, without having to preserve the actual entire historical information associated with the item of data and without requiring user interaction to resolve the conflicting information, as described more fully below.

In one example embodiment, a method for enabling intelligent merging of conflicting data is provided. The method may include detecting at least one change to at least one property of an item of data stored on a communication device. The method may further include determining a version of the item of data and a version of the at least one property or one or more versions of one or more properties in the item of data that are unchanged in response to detecting the property being changed. The method may further include updating the item of data to include indicia indicating the version of the item of data, the version of the at least one property and the versions of the properties that were unchanged. The method may further include enabling storage of the updated item of data on the communication device without storing one or more prior versions of the item of data. The updated item of data configured for utilization in resolving conflicting data in another item of data that corresponds to the item of data.

In another example embodiment, an apparatus for enabling intelligent merging of conflicting data is provided. The apparatus may include a processor and a memory including computer program code. The memory and the computer program code are configured to, with the processor, cause the apparatus to at least perform operations including detecting at least one change to at least one property of an item of data stored on the apparatus. The memory and the computer program code are further configured to, with the processor, cause the apparatus to determine a version of the item of data and a version of the at least one property or one or more versions of one or more properties in the item of data that are unchanged in response to detecting the property being changed. The memory and the computer program code are further configured to, with the processor, cause the apparatus to update the item of data to include indicia indicating the version of the item of data, the version of the at least one property and the versions of the properties that were unchanged. The memory and the computer program code are further configured to, with the processor, cause the apparatus to enable storage of the updated item of data on the apparatus without storing one or more prior versions of the item of data. The updated item of data configured for utilization in resolving conflicting data in another item of data that corresponds to the item of data.

In another example embodiment, a computer program product for enabling intelligent merging of conflicting data is provided. The computer program product includes at least one computer-readable storage medium having computer-executable program code instructions stored therein. The computer-executable program code instructions may include program code instructions configured to detect at least one change to at least one property of an item of data stored on a communication device. The program code instructions are also configured to determine a version of the item of data and a version of the at least one property or one or more versions of one or more properties in the item of data that are unchanged in response to detecting the property being changed. The program code instructions are also configured to update the item of data to include indicia indicating the version of the item of data, the version of the at least one property and the versions of the properties that were unchanged. The program code instructions are also configured to enable storage of the updated item of data on the communication device without storing one or more prior versions of the item of data. The updated item of data configured for utilization in resolving conflicting data in another item of data that corresponds to the item of data.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
FIG. 1 is a schematic block diagram of a system according to an example embodiment of the invention;
FIG. 2 is a schematic block diagram of an apparatus according to an example embodiment of the invention;
FIG. 3 is a block diagram of a system according to an example embodiment of the invention; and
FIG. 4 illustrates a flowchart for enabling performance of intelligent merging of conflicting data according to an example embodiment of the invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. As used herein, the terms "data," "content," "information" and similar terms may be used interchangeably to refer to data capable of being transmitted, received and/or stored in accordance with embodiments of the present invention. Moreover, the term "exemplary", as used herein, is not provided to convey any qualitative assessment, but instead merely to convey an illustration of an example. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As used herein, the term "replication" may refer both to the concept of storing the same data on multiple devices ("replicated data") as well as to the act of synchronizing data between two or more devices ("replicating data"). As referred to herein, "replication" may be utilized to keep data up-to-date on each device (e.g. as much as is feasible and reasonable) and the terms "replication" and "synchronization" may be used interchangeably. Additionally, as referred to herein, the term "replication" may denote the process of sharing information among devices with the goal of making the memories (e.g., databases) on each of the devices identical. The "replication" may also be asynchronous, meaning that modifications on different systems and/or devices may be handled completely independently and possible conflicts may be resolved at a subsequent time.

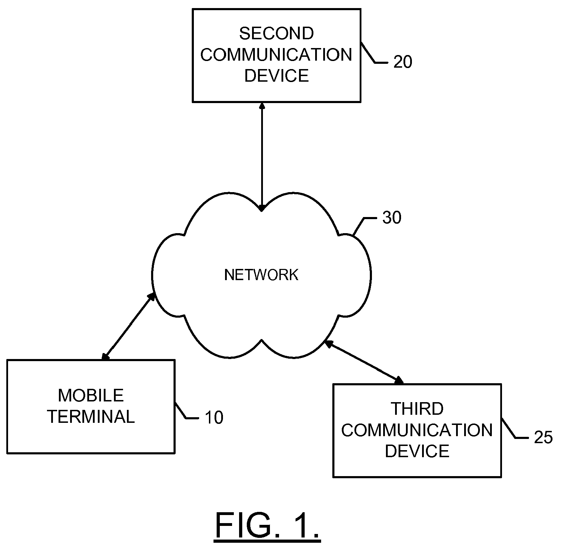

FIG. 1 illustrates a generic system diagram in which a device such as a mobile terminal 10 is shown in an example communication environment. As shown in FIG. 1, an embodiment of a system in accordance with an example embodiment of the invention may include a first communication device (e.g., mobile terminal 10) and a second communication device 20 capable of communication with each other via a network 30. In some cases, an embodiment of the present invention may further include one or more additional communication devices, one of which is depicted in FIG. 1 as a third communication device 25. In one embodiment, not all systems that employ an embodiment of the present invention may comprise all the devices illustrated and/or described herein. While an embodiment of the mobile terminal 10 and/or second and third communication devices 20 and 25 may be illustrated and hereinafter described for purposes of example, other types of terminals, such as portable digital assistants (PDAs), pagers, mobile televisions, mobile telephones, gaming devices, laptop computers, cameras, video recorders, audio/video players, radios, global positioning system (GPS) devices, Bluetooth headsets, Universal Serial Bus (USB) devices or any combination of the aforementioned, and other types of voice and text communications systems, can readily employ an embodiment of the present invention. Furthermore, devices that are not mobile, such as servers and personal computers may also readily employ an embodiment of the present invention.

The network 30 may include a collection of various different nodes (of which the second and third communication devices 20 and 25 may be examples), devices or functions that may be in communication with each other via corresponding wired and/or wireless interfaces. As such, the illustration of FIG. 1 should be understood to be an example of a broad view of certain elements of the system and not an all-inclusive or detailed view of the system or the network 30. Although not necessary, in one embodiment, the network 30 may be capable of supporting communication in accordance with any one or more of a number of First-Generation (1G), Second-Generation (2G), 2.5G, Third-Generation (3G), 3.5G, 3.9G, Fourth-Generation (4G) mobile communication protocols, Long Term Evolution (LTE) or Evolved Universal Terrestrial Radio Access Network (E-UTRAN), Self Optimizing/Organizing Network (SON) intra-LTE, inter-Radio Access Technology (RAT) Network and/or the like. In one embodiment, the network 30 may be a point-to-point (P2P) network.

One or more communication terminals such as the mobile terminal 10 and the second and third communication devices 20 and 25 may be in communication with each other via the network 30 and each may include an antenna or antennas for transmitting signals to and for receiving signals from one or more base sites. The base sites could be, for example one or more base stations (BS) that is a part of one or more cellular or mobile networks or one or more access points (APs) that may be coupled to a data network, such as a Local Area Network (LAN), Wireless Local Area Network (WLAN), a Metropolitan Area Network (MAN), and/or a Wide Area Network (WAN), such as the Internet. In turn, other devices such as processing elements (e.g., personal computers, server computers or the like) may be coupled to the mobile terminal 10 and the second and third communication devices 20 and 25 via the network 30. By directly or indirectly connecting the mobile terminal 10 and the second and third communication devices 20 and 25 (and/or other devices) to the network 30, the mobile terminal 10 and the second and third communication devices 20 and 25 may be enabled to communicate with the other devices or each other. For example, the mobile terminal 10 and the second and third communication devices 20 and 25 as well as other devices may communicate according to numerous communication protocols including Hypertext Transfer Protocol (HTTP) and/or the like, to thereby carry out various communication or other functions of the mobile terminal 10 and the second and third communication devices 20 and 25, respectively.

Furthermore, although not shown in FIG. 1, the mobile terminal 10 and the second and third communication devices 20 and 25 may communicate in accordance with, for example, radio frequency (RF), near field communication (NFC), Bluetooth (BT), Infrared (IR) or any of a number of different wireline or wireless communication techniques, including Local Area Network (LAN), Wireless LAN (WLAN), Worldwide Interoperability for Microwave Access (WiMAX), Wireless Fidelity (Wi-Fi), Ultra-Wide Band (UWB), Wibree techniques and/or the like. As such, the mobile terminal 10 and the second and third communication devices 20 and 25 may be enabled to communicate with the network 30 and each other by any of numerous different access mechanisms. For example, mobile access mechanisms such as Wideband Code Division Multiple Access (W-CDMA), CDMA2000, Global System for Mobile communications (GSM), General Packet Radio Service (GPRS) and/or the like may be supported as well as wireless access mechanisms such as WLAN, WiMAX, and/or the like and fixed access mechanisms such as Digital Subscriber Line (DSL), cable modems, Ethernet and/or the like.

In an example embodiment, the first communication device (e.g., the mobile terminal 10) may be a mobile communication device such as, for example, a wireless telephone or other devices such as a personal digital assistant (PDA), mobile computing device, camera, video recorder, audio/video player, positioning device, game device, television device, radio device, or various other like devices or combinations thereof. The second communication device 20 and the third communication device 25 may be mobile or fixed communication devices. However, in one example, the second communication device 20 and the third communication device 25 may be servers, remote computers or terminals such as personal computers (PCs) or laptop computers.

In an example embodiment, the network 30 may be an ad hoc or distributed network arranged to be a smart space. Thus, devices may enter and/or leave the network 30 and the devices of the network 30 may be capable of adjusting operations based on the entrance and/or exit of other devices to account for the addition or subtraction of respective devices or nodes and their corresponding capabilities.

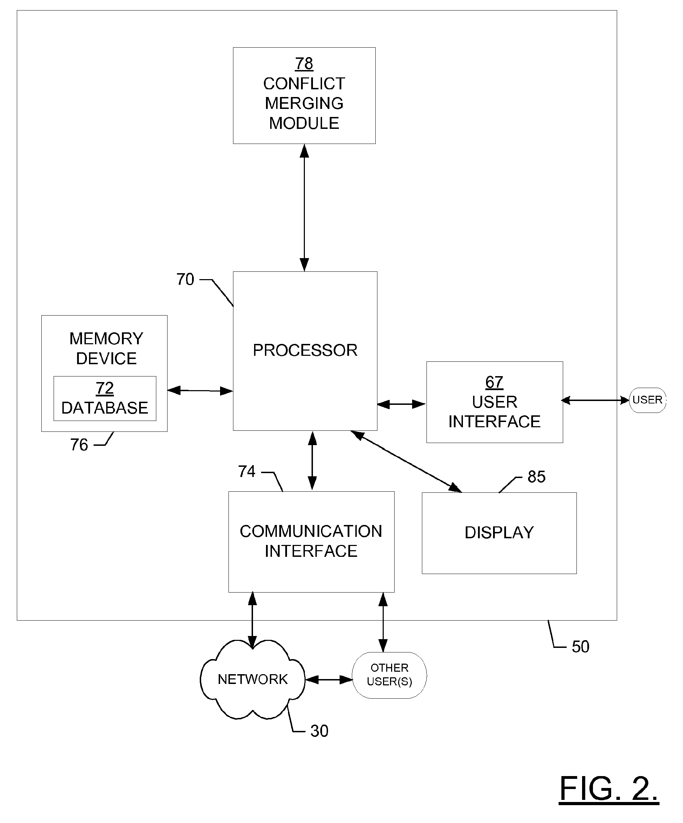

In an example embodiment, the mobile terminal 10 as well as the second and third communication devices 20 and 25 may employ an apparatus (e.g., apparatus of FIG. 2) capable of employing an embodiment of the invention.

FIG. 2 illustrates a schematic block diagram of an apparatus for performing intelligent merging of conflicting data. An example embodiment of the invention will now be described with reference to FIG. 2, in which certain elements of an apparatus 50 are displayed. The apparatus 50 of FIG. 2 may be employed, for example, on the mobile terminal 10 (and/or the second communication device 20 or the third communication device 25). Alternatively, the apparatus 50 may be embodied on a network device of the network 30. However, the apparatus 50 may alternatively be embodied at a variety of other devices, both mobile and fixed (such as, for example, any of the devices listed above). In some cases, an embodiment may be employed on a combination of devices. Accordingly, one embodiment of the invention may be embodied wholly at a single device (e.g., the mobile terminal 10), by a plurality of devices in a distributed fashion (e.g., on one or a plurality of devices in a P2P network) or by devices in a client/server relationship. Furthermore, it should be noted that the devices or elements described below may not be mandatory and thus some may be omitted in a certain embodiment.

Referring now to FIG. 2, the apparatus 50 may include or otherwise be in communication with a processor 70, a user interface 67, a communication interface 74, a memory device 76, which may include a database 72, a display 85 and a conflict merging module 78. In one example embodiment, the display 85 may be a touch screen display. The memory device 76 may include, for example, volatile and/or non-volatile memory. For example, the memory device 76 may be an electronic storage device (e.g., a computer readable storage medium) comprising gates configured to store data (e.g., bits) that may be retrievable by a machine (e.g., a computing device like processor 70). In an example embodiment, the memory device 76 may be a tangible memory device that is not transitory. The memory device 76 may be configured to store information, data, files, applications, instructions or the like for enabling the apparatus to carry out various functions in accordance with an example embodiment of the invention. For example, the memory device 76 could be configured to buffer input data for processing by the processor 70. Additionally or alternatively, the memory device 76 could be configured to store instructions for execution by the processor 70. The memory device 76 may include a database 72 configured to store content (e.g., documents, contact information, etc.). As yet another alternative, the memory device 76 may be one of a plurality of databases that store information and/or media content (e.g., pictures, videos, etc.).

The apparatus 50 may, in one embodiment, be a mobile terminal (e.g., mobile terminal 10) or a fixed communication device or computing device configured to employ an example embodiment of the invention. However, in one embodiment, the apparatus 50 may be embodied as a chip or chip set. In other words, the apparatus 50 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 50 may therefore, in some cases, be configured to implement an embodiment of the invention on a single chip or as a single "system on a chip." As such, in some cases, a chip or chipset may constitute means for performing one or more operations for providing the functionalities described herein. Additionally or alternatively, the chip or chipset may constitute means for enabling user interface navigation with respect to the functionalities and/or services described herein.

The processor 70 may be embodied in a number of different ways. For example, the processor 70 may be embodied as one or more of various processing means such as a coprocessor, microprocessor, a controller, a digital signal processor (DSP), processing circuitry with or without an accompanying DSP, or various other processing devices including integrated circuits such as, for example, an ASIC (application specific integrated circuit), an FPGA (field programmable gate array), a microcontroller unit (MCU), a hardware accelerator, a special-purpose computer chip, or the like. In an example embodiment, the processor 70 may be configured to execute instructions stored in the memory device 76 or otherwise accessible to the processor 70. As such, whether configured by hardware or software methods, or by a combination thereof, the processor 70 may represent an entity (e.g., physically embodied in circuitry) capable of performing operations according to an embodiment of the invention while configured accordingly. Thus, for example, when the processor 70 is embodied as an ASIC, FPGA or the like, the processor 70 may be specifically configured hardware for conducting the operations described herein. Alternatively, as another example, when the processor 70 is embodied as an executor of software instructions, the instructions may specifically configure the processor 70 to perform the algorithms and operations described herein when the instructions are executed. However, in some cases, the processor 70 may be a processor of a specific device (e.g., a mobile terminal or network device) adapted for employing an embodiment of the invention by further configuration of the processor 70 by instructions for performing the algorithms and operations described herein. The processor 70 may include, among other things, a clock, an arithmetic logic unit (ALU) and logic gates configured to support operation of the processor 70.

In an example embodiment, the processor 70 may be configured to operate a connectivity program, and/or a coprocessor or the like may execute a browser, Web browser or the like. In this regard, the connectivity program may enable the apparatus 50 to transmit and receive Web content, such as for example location-based content or any other suitable content, according to a Wireless Application Protocol (WAP), for example.

Meanwhile, the communication interface 74 may be any means such as a device or circuitry embodied in either hardware, a computer program product, or a combination of hardware and software that is configured to receive and/or transmit data from/to a network and/or any other device or module in communication with the apparatus 50. In this regard, the communication interface 74 may include, for example, an antenna (or multiple antennas) and supporting hardware and/or software for enabling communications with a wireless communication network (e.g., network 30). In fixed environments, the communication interface 74 may alternatively or also support wired communication. As such, the communication interface 74 may include a communication modem and/or other hardware/software for supporting communication via cable, digital subscriber line (DSL), universal serial bus (USB), Ethernet or other mechanisms.

The user interface 67 may be in communication with the processor 70 to receive an indication of a user input at the user interface 67 and/or to provide an audible, visual, mechanical or other output to the user. As such, the user interface 67 may include, for example, a keyboard, a mouse, a joystick, a display, a touch screen, a microphone, a speaker, or other input/output mechanisms. In an example embodiment in which the apparatus is embodied as a server or some other network devices, the user interface 67 may be limited, remotely located, or eliminated. The processor 70 may comprise user interface circuitry configured to control at least some functions of one or more elements of the user interface, such as, for example, a speaker, ringer, microphone, display, and/or the like. The processor 70 and/or user interface circuitry comprising the processor 70 may be configured to control one or more functions of one or more elements of the user interface through computer program instructions (e.g., software and/or firmware) stored on a memory accessible to the processor 70 (e.g., memory device 76, and/or the like).

In an example embodiment, the processor 70 may be embodied as, include or otherwise control the conflict merging module. The conflict merging module 78 may be any means such as a device or circuitry operating in accordance with software or otherwise embodied in hardware or a combination of hardware and software (e.g., processor 70 operating under software control, the processor 70 embodied as an ASIC or FPGA specifically configured to perform the operations described herein, or a combination thereof) thereby configuring the device or circuitry to perform the corresponding functions of the conflict merging module 78, as described below. Thus, in an example in which software is employed, a device or circuitry (e.g., the processor 70 in one example) executing the software forms the structure associated with such means.

The conflict merging module 78 may detect conflicting data among one or more communication devices (e.g., multiple apparatuses 50) and may perform intelligent merging of the conflicting data to update the conflicting data on the one or more communication devices without having to preserve the entire actual historical data of the one or more communication devices.

In this regard, for example, the conflict merging module 78 may assign a version to data (e.g., documents, contacts, etc.) in such a manner that allows the conflict merging module 78 to detect conflicts. For example, as a prerequisite, the conflict merging module 78 may assign each item(s) of data (e.g., document(s)) of the apparatus 50 a version that allows the conflict merging module 78 to detect when the same item of data (e.g., document) has been modified on one or more other communication devices (e.g., one or more other apparatuses 50). In one example embodiment, the conflict merging module 78 may utilize a version vector to assign a version to an item(s) of data that enables the conflict merging module 78 to detect when two or more versions of data (e.g., two document versions) are identical, in conflict or in some order may be utilized. However, any other suitable mechanism of generating and assigning a version(s) to an item(s) of data may be utilized by the conflict merging module 78 without departing from the spirit and scope of the invention. The version(s) may be stored by the conflict merging module 78 in a field, for example, using a field suitable for metadata (e.g., a meta.version field), of an item of data (where "item of data" may, for example, be a document).

In this regard, a version vector may be a mechanism for tracking changes to data in a communications system where multiple nodes may update the data. Each time a node(s) experiences an update event, the conflict merging module 78 may increment a counter in the vector by one. In one example embodiment, the first number in the version vector may denote the version of data on a particular node (e.g., a first node) and the second number of the version vector may denote the version of data on another node (e.g., a second node).

As such, in an instance in which a property of data (e.g., a document) is changed, the conflict merging module 78 may store in the data (e.g., a document) itself information about what the data version was when the particular property was modified. This allows the conflict merging module 78 to perform intelligent merging of conflicting data, without having to preserve the actual historical data, as described more fully below.

For instance, the conflict merging module 78 may not need to store any previous versions of an item(s) of data (e.g., a document). Instead, the conflict merging module 78 may store a single version of the item(s) of data (e.g., a document) on a communication device. By storing one version of the item(s) of data (e.g., a document) on a communication device, the conflict merging module 78 may serve to optimize and conserve storage space by not saving all prior versions of the item(s) of data, which is done in conventional approaches. Since the conflict merging module 78 may augment an item(s) of data to indicate changes and corresponding versions, the conflict merging module 78 may not need to facilitate storage of any previous/earlier versions of the information indicating the changes.

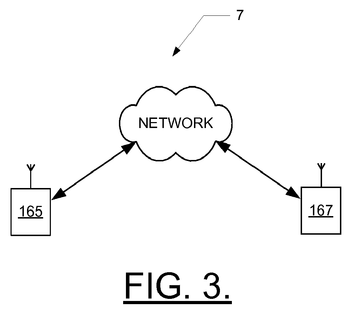

Referring now to FIG. 3, an example embodiment of a system for enabling intelligent merging of conflicting/modified data is provided. The system 7 may include one or more communication devices 165 and 167 (e.g., apparatuses 50 (e.g., mobile terminals 10)). Although FIG. 3 shows two communication devices 165, 167, it should be pointed out that any suitable number of communication devices 165, 167 may be part of the system 7 without departing from the spirit and scope of the invention.

An example of what a document may look like in the context of two replicating communication devices (e.g., first and second devices (e.g., communication devices 165 and 167)) is as follows.

```
             var contact = {
                meta: {
                   id: 4711
                   version: [1, 1]
                }
                firstName: "Joh",
                lastName: "Doe"
              };
```

When an application updates a document(s), the document version provided by the application to the conflict merging module 78 should be the same as the version of the document currently stored in a database (e.g., database 72). For example, in an instance in which the application wants to correct the firstName it may do so as follows.

```
              contact.firstName = "John";
              db.updateDocument(contact, ...);
```

Additionally, in an instance in which the document version provided by the conflict merging module 78 is the same as that of the corresponding document in a database (e.g., database 72), the version is increased (e.g., increased by one) in accordance with the versioning scheme being utilized (for instance, the example below uses a version vector) and the update is allowed to proceed. In this regard, the end result is that the document in the database (e.g., database 72) may become as follows.

```
             var contact = {
                meta: {
                   id: 4711
                   version: [2, 1]
                }
                firstName: "John",
                lastName: "Doe"
              };
```

The version is now [2, 1], in which the first number of the version vector 2 denotes that the change occurred on a first device (e.g., communication device 165).

With this kind of blanket update there is no record of what has changed, which may lead to difficulty of merging data since it is unknown exactly what data has changed.

In an instance in which it is important to be able to merge, automatically or otherwise, documents modified on different nodes (e.g., communication devices 165 and 167), then an application may update a property stored in a database (db) as follows.
db.updateProperty(contact, "lastName", "Doe 2nd")

In this regard, the caller of the application may still provide the entire document, but the document may only used for checking that the application is working with the latest version of the document. As shown below, this time, the conflict merging module 78 may make a note and indicates the property (e.g., lastName) that was changed, and at what document version (e.g., [3, 1]), before actually storing the document for example in a memory (e.g., database 72 of memory device 76).

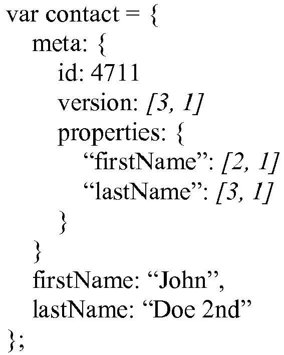

As in a normal update, the version of the entire document is also updated to [3, 1] by the conflict merging module 78 since the version of the document is incremented from its prior version of 2 (e.g., [2, 1]) to its current version of 3 (e.g., [3, 1]) on a first device (e.g., communication device 165). The conflict merging module 78 may also record the version of the property firstName that was not updated, which is [2, 1] in this example since the firstName property takes the version of the prior document (e.g., [2, 1]) given that the firstName property was not updated. In this regard, in an example embodiment whenever a property (e.g., lastName) is modified, the conflict merging module 78 may ensure that all other properties (e.g., property firstName) also have a version number (e.g., [2, 1]).

Consider further an example in which this document is replicated to a second device (e.g., communication device 167), in which the property firstName is subsequently changed to "Johnny" (e.g., using an updateProperty mechanism). In order to replicate the document (e.g., a contact document having identifier (id) 4711) to the second device (e.g., communication device 167), the conflict merging module 78 may copy the document to the second device, then a conflict merging module (e.g., conflict merging module 78) of the second device may check the relationship between the version of the document (e.g., a contact document having id 4711) it has stored locally (e.g., in database 72) and the document being received from the first device (e.g., communication device 165). In this example, since the document being received by the second device is a direct descendant that is newer than the same document that the second device has stored locally, the conflict merging module of the second device may update the document on the second device to include any changes. In this regard, the document on the second device (e.g., communication device 167) may be modified/generated by the conflict merging module as follows:

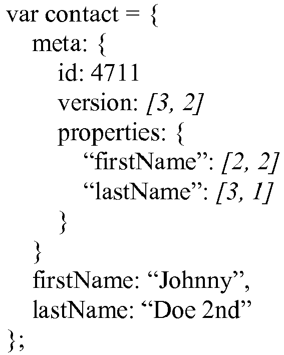

In this manner, the version of the document itself is incremented by the conflict merging module 78 to [3, 2], since the prior document having version [3, 1] was replicated to a second device (e.g., communication device 167). The firstName property may be incremented by the conflict merging module 78 to [2, 2], since the change of the property firstName to "Johnny" occurred on the second device (e.g., communication device 167) and was changed from the property firstName "John" which was designated as version [2, 1]. Additionally, the conflict merging module 78 may maintain property lastName at its prior version of [3, 1] since property lastName was not changed on the second device (e.g., communication device 167).

Meanwhile, consider further that property lastName was modified and changed from "Doe 2nd" to "Doe second" (e.g., after the document was replicated to the second device) on the first device and as such the document may be as follows on the first device.

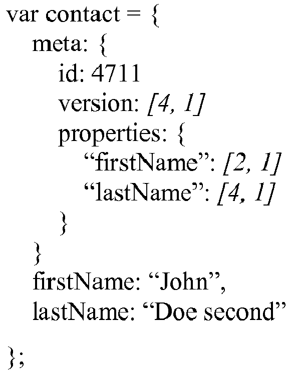

In this regard, the conflict merging module 78 of the first device increments the version of the document on the first device from the prior version on the first device of [3, 1] to [4, 1]. Additionally, the conflict merging module 78 of the first device may increment the property lastName having version [3, 1] on the first device to version [4, 1] since the property lastName was modified on the first device. The conflict merging module 78 of the first device may maintain the version of the property firstName as [2, 1] which is the same as the prior version [2, 1] of the property firstName in the document on the first device since there was no change to the property firstName.

Additionally, in an instance in which the conflict merging module 78 of the first device performs replication and detects that the documents (e.g., contact documents assigned id 4711 on the first and second devices) have been simultaneously modified on the first device (e.g., communication device 165) and the second device (e.g., communication device 167), the conflict merging module 78 may utilize a unique technique for merging the data of the documents in a meaningful way.

For example, from the document (e.g., a contact document assigned id 4711) modified on the second device (e.g., communication device 167), the conflict merging module of the second device may select property firstName because the version [2, 2] is more recent than the version [2, 1] of property firstName and from the document (e.g., a contact document assigned id 4711) modified on the first device (e.g., communication device 165), the conflict merging module 78 of the first device may select property lastName because the version [4, 1] is more recent than the version [3, 1] of property lastName. As such, the resulting document that may be stored by both the first device and the second device may be as follows:

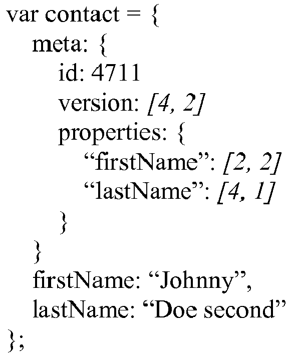

As such, the conflict merging module (e.g., conflict merging module 78) of the first and second devices may generate a document that includes the most recent versions of any updated properties. In this manner, the conflict merging module 78 may automatically perform intelligent merging of data when conflicting data of the same documents are detected without preserving the entire actual historical data of the documents and without requiring user interaction to merge the conflicting data.

On the other hand, it is pointed out that if the conflict merging module had not stored the version of property firstName when property lastName was modified, the conflict merging module may have been unable to deduce which version of property firstName is the more appropriate version.

In the case of hierarchical properties, the conflict merging module 78 may ensure that a version is stored for every leaf-property (e.g., a property without sub-properties) even if only a particular one or an entire sub-property is modified. In this regard, a leaf-property may be a property whose value is a primitive value (e.g., string, integer, floating-point number, Boolean) and not an object ({...}). A sub-property may be a property whose value is not a primitive value. Consider the example of the following document as a starting point.

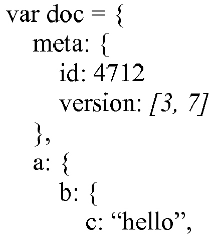

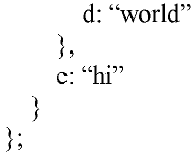

Additionally, suppose that this document has been replicated to a second device (e.g., communication device 167). In an instance in which the property a.e is modified on the first device (e.g., communication device 165) using the following updateProperty mechanism
db.updateProperty(doc, "a.e", "hi there"),
the resulting document may be as follows.

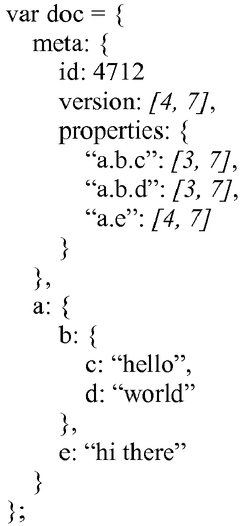

In this regard, in an instance in which any property is modified in a way that preserves version information, the conflict merging module 78 may ensure that there is an explicit version entry for all leaf properties. And the version of the leaf properties is the version of the document, before it was modified. As such, the version of leaf properties a.b.c and a.b.d is assigned [3, 7], by the conflict merging module 78, which was the version of the document (e.g., a document assigned id 4712) before the document was modified. Furthermore, the version of the document is incremented for the first device, by the conflict merging module 78 such that the version for the first device is [4, 7]. In this example, property a.e is being modified by an application and as such, the conflict merging module 78 may count up or increment the prior version [3, 7] of the document on the first device such that version [4, 7] is assigned, by the conflict merging module 78, to property a.e. Furthermore, the version of an intermediate property is the maximum version of its child properties.

In an instance in which a sub-property is updated in its entirety, the conflict merging module 78 may store version information for all leaf-properties in the sub-property.

For example, in an instance in which the property a.b is modified on a second device (e.g., communication device 167) by using the following updateProperty mechanism.

db.updateProperty(doc, "a.b", { c: "hello", d: "hello" }),
the resulting document may be as follows,

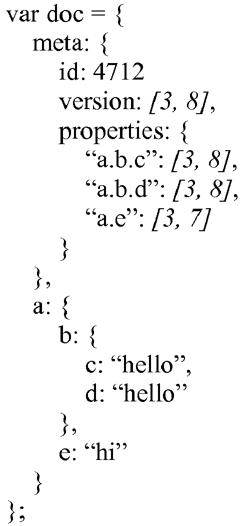

In this manner, the conflict merging module 78 of the second device (e.g., communication device 165) may count up or increment the version [3, 7] of the prior document on the second device and assign version [3, 8] to this document (e.g., the document assigned id 4712). Since property a.e did not have any prior version information assigned on the second device and since the property a.e is not being changed in this example, the conflict merging module 78 may assign the prior version [3, 7] of the document, which is the version before it was modified, as the current version [3, 7] of the property a.e. Additionally, since property a.b.c is being modified to "hello" and property a.b.d is being modified to "hello" in this example, the conflict merging module 78 may count up or increment the prior version [3, 7] of the document and assign the version [3, 8] to properties a.b.c and a.c.d.

In this example, at the time replication is performed (also referred to herein as replication time), the conflict merging module 78 may detect a conflict, because the document has been independently modified on two different devices (e.g., first and second devices (e.g., communication devices 165 and 167)). However, since the actual properties that have been modified are not independently in conflict, the conflict merging module may merge the two document versions. For instance, the document which is modified on the second device (e.g., communication device 167), may be replicated (e.g., copied to) to the first device (e.g., communication device 165) and then these two documents may be merged by the conflict merging module of the first device and stored (e.g., in memory (e.g., memory device 76 or database 72) on the first device. Additionally, the document which was modified on the first device (e.g., communication device 165) may be replicated to the second device (e.g., communication device 167) and merged by the conflict merging module 78 of the second device and stored on the second device (e.g., in memory (e.g., memory device 76 or database 72). The resulting document is now the same on both the first device and the second device and may be represented as follows.

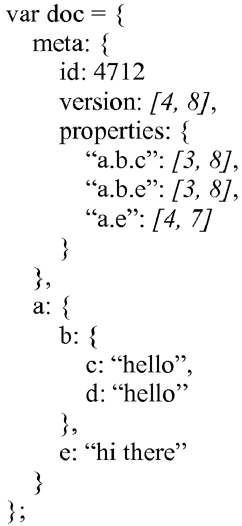

As shown in the resulting document above, the properties a.b.c and a.b.d reflect the changes to "hello" having versions [3, 8]. Additionally, the property a.e reflects the changes to "hi there" having version [4, 7]. Moreover, the conflict merging module 78 may implement and execute a rule designating that a version of a non-leaf property (e.g., a property which has child properties) is the largest version of any of its children and this rule may be applied to the version of the document itself. A non-leaf property may be a property whose value is not a primitive value, such as string, integer, float-point, Boolean, but instead an object or property including other properties. As such, in this example, the conflict merging module 78 may analyze the largest number of each of the versions of the properties and may assign these values as the version for the resulting document. For example, the largest numbers of versions of the properties are 4 and 8. As such, the conflict merging module 78 may assign the version [4, 8] to the resulting document.

Consider below an example of a document with a deeper hierarchy from the following starting point:

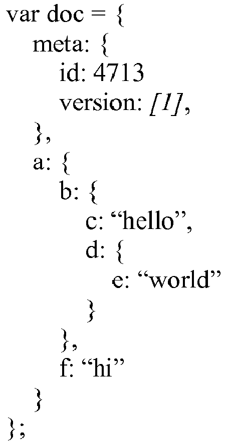

In this example, the conflict merging module 78 may analyze the document and detect that there are no property specific versions. As such, the conflict merging module 78 may assign the version of the document which is [1] as the version of all the properties. Moreover, this example is being considered from the point of view of a single node/device (e.g., communication device 165). For instance, in this example, the document may only be stored on one device.

Consider further that property a.b.c is being modified and changed from property "hello" to property "HELLO". In this regard, the conflict merging module 78 may store in the meta.properties of the document version information about all leaf-properties. As such, the resulting document may be as follows.

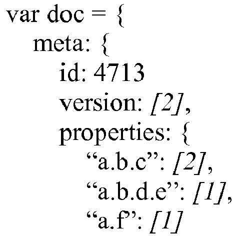

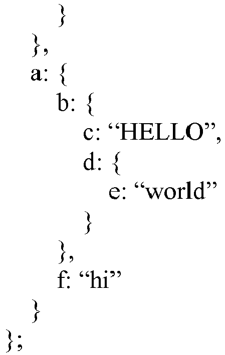

Since there is a modification to the property a.b.c of the document, the conflict merging module 78 may increment the version of the document to [2]. Additionally, given that the property a.b.c is being modified, the conflict merging module 78 may increment the version of property a.b.c to 2. Furthermore, since properties a.b.d.e and a.f were not modified, the conflict merging module 78 may assign a version of [1] to the property a.b.d.e and the property a.f corresponding to the prior version of the document.

Consider another example in which property a.b.d.e is being modified to change "world" to "WORLD". According to an example embodiment, in an instance in which a particular property is modified, the value for that property is based on the value of the document itself before it was modified plus 1. In this regard, the conflict merging module 78 may assign and store version information [3] for property a.b.d.e, since the prior version of the document was [2] and because the conflict merging module 78 may increment the value of the version [2] of the document by 1. The conflict merging module 78 may also increment the version of the document itself by 1 to assign a value of [3] to the current document. Since property a.b.c and property a.f were not modified in this example, the conflict merging module 78 may assign the prior value [2] of property a.b.c as the current value [2] of property a.b.c and the prior value [1] of property a.f as the current value [1] of a.f. As such, the resulting document modified/generated by the conflict merging module 78 may be as follows.

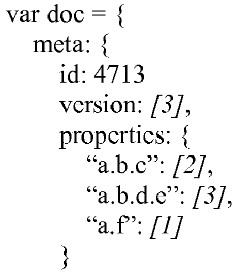

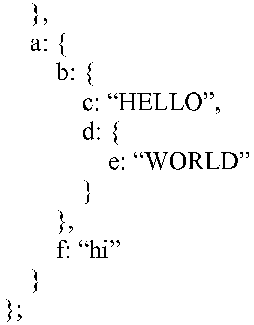

As another example, consider that the property a.b is being modified in one operation (for example, with the same sub-properties, although they could be different). In this regard, the conflict merging module 78 may include version information about all leaf properties in the document as follows.

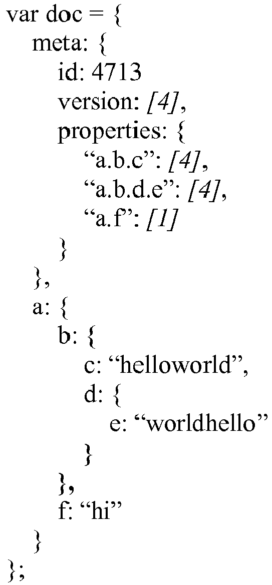

In this example, the conflict merging module 78 may assign and store version information [4] for property a.b.c and property a.b.d.e, since the prior version of the document was [3] and because the conflict merging module 78 increments a value of the version [3] of the document by 1. The conflict merging module 78 may also increment the version of the document itself by 1 to assign a value of [4] to the current document. Since property a.f was not modified in this example, the conflict merging module 78 may assign the prior value [1] of property a.f as the current value [1] of property a.f.

In this example, storing the version information explicitly for each property may be redundant since the version of properties a.b.c and a.b.d.e are the same and as such, the conflict merging module 78 may conserve/save storage space of a memory (e.g., memory device 76) by removing the following entries in the document.
"a.b.c": [4]
"a.b.d.e": [4]

Instead, the conflict merging module 78 may replace these entries with the single entry "a.b": [4].

In this regard, the conflict merging module 78 may implement a rule designating that in an instance in which there is no explicit version noted for a particular leaf property, then the version of the leaf property is that of the closest ancestor property for which there is a version. The requirement is that on each property branch (e.g., property a.b.c or property a.b.d.e) there can be at most one version entry. In practice, that would mean that in a case like the one above, where there is only the note that the version of property a.b is [4] (e.g., implying that the version of property a.b.c, property a.b.d and property a.b.d.e also is [4]), then if property a.b.d.e is modified, thus its version becoming [5], the conflict merging module 78 would have to remove the entry for property a.b and add an entry for property a.b.c [4]. It should be pointed out that this requirement may be needed to ensure that the stored versions are correct according to the rule that the version of a non-leaf property is the largest version of any of its children (e.g., child properties).

As such, in an example embodiment, the conflict merging module 78 may apply the conceptual rule that the version of every leaf property is assigned and stored (e.g., in the document itself), and the version of a non-leaf property is the largest version of any of its children (e.g., child properties). Moreover, this rule may be applied all the way to the version of the document itself.

In another example embodiment, we allow a property branch to have several version entries. In this case, the version of a property is the largest version of any of its children (e.g., irrespective of whether the property has a version noted or not), or if it has no children or the children have no versions noted, the version of the property is then that of the closest ancestor property (e.g., including itself) for which there is a version. This more complicated arrangement allows versions to be stored more compactly. For instance, in the previous example where version of property a.b is [4] and a.b.d.e is modified, it would be sufficient to store the version [5] for the property a.b.d.e. For a, a.b and a.b.d, which all have a child a.b.d.e with a version noted, the version is the largest version of any of its children, e.g., [5]. For a.b.c the version is the version of the closest ancestor property with a version noted, including a.b.c itself. The closest such property is a.b, which has version [4]. Similarly, for a.b.d.e the version is the version of the closest ancestor property with a version noted, including a.b.d.e itself. The closest such property is a.b.d.e itself, which has version [5]. This example embodiment has the advantage of storing version information more compactly. On the other hand, in this example embodiment obtaining the version of a non-leaf property may require iterating through all of its children. This may be mitigated by using the more compact representation only for persistent storage, and converting to another representation when the data is loaded into memory for processing.

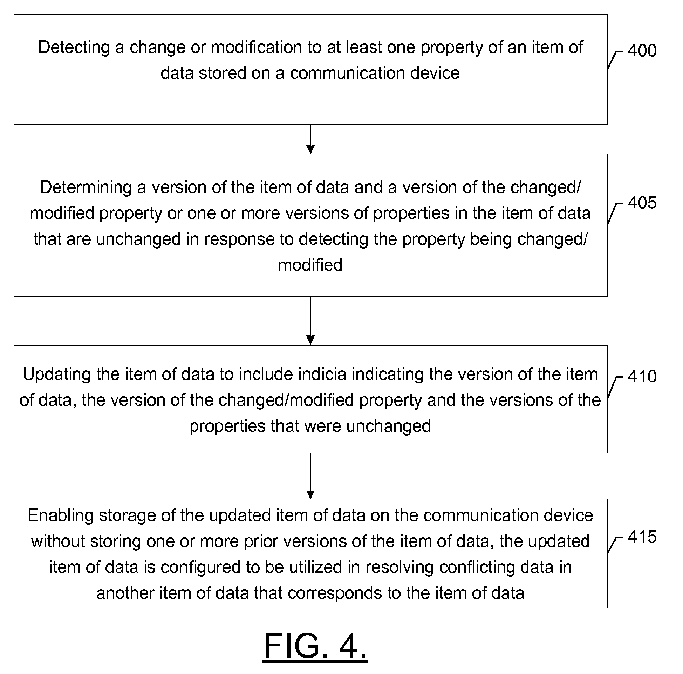

Referring now to FIG. 4, a flowchart of an example method for enabling intelligent merging of conflicting data is provided. At operation 400, a communication device (e.g., apparatus 50 (e.g., communication device 165)) may include means, such as the conflict merging module 78, the processor 70 and/or the like for detecting at least one change or modification to at least one property (e.g., property lastName, etc.) of an item of data (e.g., a document) stored (e.g., in memory device 76 or the database 72 of memory device 76) on the communication device.

At operation 405, the communication device (e.g., apparatus 50 (e.g., communication device 165)) may include means, such as the conflict merging module 78, the processor 70 and/or the like for determining a version (e.g., [3, 1]) of the item of data (e.g., a document) and a version (e.g., [3, 1]) of the property (e.g., property lastName, etc.) or one or more versions (e.g., [2, 1]) of one or more properties (e.g., property firstName, etc.) in the item of data that are unchanged in response to detecting the property being changed/modified. At operation 410, the communication device (e.g., apparatus 50 (e.g., communication device 165)) may include means, such as the conflict merging module 78, the processor 70 and/or the like for updating the item of data to include indicia indicating the version of the item of data, the version of the at least one changed/modified property and the versions of the properties that were unchanged.

At operation 415, the communication device (e.g., apparatus 50 (e.g., communication device 165)) may include means, such as the conflict merging module 78, the processor 70 and/or the like for enabling storage of the updated item of data on the communication device without storing one or more prior versions of the item of data. The updated item of data is configured to be utilized in resolving conflicting data in another item of data (also referred to herein as other item of data) (e.g., another document on another communication device (e.g., communication device 167)) that corresponds to the item of data. In an example embodiment, the updated item of data stored on the communication device (e.g., communication device 165) may correspond to a document and the other item of data may correspond to the same document (e.g., a version of the same document) on another communication device (e.g., communication device 167).

It should be pointed out that FIG. 4 is a flowchart of a system, method and computer program product according to an example embodiment of the invention. It will be understood that each block of the flowchart, and combinations of blocks in the flowchart, can be implemented by various means, such as hardware, firmware, and/or a computer program product including one or more computer program instructions. For example, one or more of the procedures described above may be embodied by computer program instructions. In this regard, in an example embodiment, the computer program instructions which embody the procedures described above are stored by a memory device (e.g., memory device 76) and executed by a processor (e.g., processor 70, conflict merging module 78). As will be appreciated, any such computer program instructions may be loaded onto a computer or other programmable apparatus (e.g., hardware) to produce a machine, such that the instructions which execute on the computer or other programmable apparatus cause the functions specified in the flowchart blocks to be implemented. In one embodiment, the computer program instructions are stored in a computer-readable memory that can direct a computer or other programmable apparatus to function in a particular manner, such that the instructions stored in the computer-readable memory produce an article of manufacture including instructions which implement the function(s) specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart blocks.

Accordingly, blocks of the flowchart support combinations of means for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In an example embodiment, an apparatus for performing the method of FIG. 4 above may comprise a processor (e.g., the processor 70, the conflict merging module 78) configured to perform some or each of the operations (400 - 415) described above. The processor may, for example, be configured to perform the operations (400 - 415) by performing hardware implemented logical functions, executing stored instructions, or executing algorithms for performing each of the operations. Alternatively, the apparatus may comprise means for performing each of the operations described above. In this regard, according to an example embodiment, examples of means for performing operations (400 - 415) may comprise, for example, the processor 70 (e.g., as means for performing any of the operations described above), the conflict merging module 78 and/or a device or circuitry for executing instructions or executing an algorithm for processing information as described above.
Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
detecting at least one change to at least one property of an item of data stored on a communication device;
determining a version of the item of data and a version of the at least one property or one or more versions of one or more properties in the item of data that are unchanged in response to detecting the property being changed;
updating the item of data to include indicia indicating the version of the item of data, the version of the at least one property and the versions of the properties that were unchanged; and
enabling storage of the updated item of data on the communication device without storing one or more prior versions of the item of data, the updated item of data configured for utilization in resolving conflicting data in another item of data that corresponds to the item of data.

2. The method of claim 1, further comprising:
replicating the updated item of data to another communication device that stores the other item of data that corresponds to the item of data.

3. The method of claim 2, further comprising:
detecting that the other item of data and the updated item of data are simultaneously modified in response to receiving the other item of data from the other communication device during the replicating of the updated item of data to the other communication device, the other item of data comprises properties that correspond to the properties of the updated item of data.

4. The method of claim 3, further comprising:
determining whether the other item of data and the updated item of data are in conflict based in part on detecting whether one or more of the properties of the other item of data are updated and comprise respective versions that are more recent than the version of the at least one property and the corresponding versions of the one or more properties in the updated item of data.

5. The method of claim 4, further comprising:
including, in the updated item of data, at least one of the updated properties and a respective version detected as being more recent than a corresponding property of the updated item of data in order to obtain a merged item of data comprising the most recent versions of updated properties.

6. The method of claim 1, wherein the properties comprise one or more hierarchal properties and the method further comprises:
assigning a version designated as the version of the item of data before the item of data was modified as the versions of each of the properties in an instance in which the at least one property is changed.

7. The method of claim 6, further comprising one of:
incrementing a value of the version of the item of data before the item of data was modified and assigning the incremented value as a portion of the version of the at least one changed property; or
determining a largest version of one or more detected child properties and assigning the version of the item of data as the largest version of the child properties; or
detecting another property of the item of data and determining that the other property does not initially comprise a version and assigning a version to the other property corresponding to a version of a closest ancestor property.

8. An apparatus configured to:
detect at least one change to at least one property of an item of data stored on the apparatus;
determine a version of the item of data and a version of the at least one property or one or more versions of one or more properties in the item of data that are unchanged in response to detecting the property being changed;
update the item of data to include indicia indicating the version of the item of data, the version of the at least one property and the versions of the properties that were unchanged; and
enable storage of the updated item of data on the apparatus without storing one or more prior versions of the item of data, the updated item of data configured for utilization in resolving conflicting data in another item of data that corresponds to the item of data.

9. The apparatus of claim 8, wherein the apparatus is further configured to:
replicate the updated item of data to a communication device that stores the other item of data that corresponds to the item of data.

10. The apparatus of claim 9, wherein the apparatus is further configured to:
detect that the other item of data and the updated item of data are simultaneously modified in response to receiving the other item of data from the communication device during the replication of the updated item of data to the communication device, the other item of data comprises properties that correspond to the properties of the updated item of data.

11. The apparatus of claim 10, wherein the apparatus is further configured to:
determine whether the other item of data and the updated item of data are in conflict based in part on detecting whether one or more of the properties of the other item of data are updated and comprise respective versions that are more recent than the version of the at least one property and the corresponding versions of the one or more properties in the updated item of data.

12. The apparatus of claim 11, wherein the apparatus is further configured to:
include, in the updated item of data, at least one of the updated properties and a respective version detected as being more recent than a corresponding property of the updated item of data in order to obtain a merged item of data comprising the most recent versions of updated properties.

13. The apparatus of claim 8, wherein the properties comprise one or more hierarchal properties and wherein the apparatus is further configured to:
assign a version designated as the version of the item of data before the item of data was modified as the versions of each of the properties in an instance in which the at least one property is changed.

14. The apparatus of claim 13, wherein the apparatus is further configured for one of:
increment a value of the version of the item of data before the item of data was modified and assign the incremented value as a portion of the version of the at least one changed property; or
determine a largest version of one or more detected child properties and assign the version of the item of data as the largest version of the child properties; or
detect another property of the item of data and determine that the other property does not initially comprise a version; and assign a version to the other property corresponding to a version of a closest ancestor property.

15. A computer program product comprising at least one non-transitory computer-readable storage medium having computer-readable program code portions stored therein, the computer-readable program code portions comprising:
program code instructions configured to detect at least one change to at least one property of an item of data stored on a communication device;
program code instructions configured to determine a version of the item of data and a version of the at least one property or one or more versions of one or more properties in the item of data that are unchanged in response to detecting the property being changed;
program code instructions configured to update the item of data to include indicia indicating the version of the item of data, the version of the at least one property and the versions of the properties that were unchanged; and
program code instructions configured to enable storage of the updated item of data on the communication device without storing one or more prior versions of the item of data, the updated item of data configured for utilization in resolving conflicting data in another item of data that corresponds to the item of data.

16. The computer program product of claim 15, further comprising:
program code instructions configured to replicate the updated item of data to another communication device that stores the another item of data that corresponds to the item of data.
